(19) Europäisches Patentamt
European Patent Office
Office européen des brevets

(11) Veröffentlichungsnummer: **0 011 112**
**B1**

# (12) EUROPÄISCHE PATENTSCHRIFT

(45) Veröffentlichungstag der Patentschrift: **20.01.82**

(51) Int. Cl.³: **C 08 G 63/76,** C 09 D 3/64

(21) Anmeldenummer: **79103660.1**

(22) Anmeldetag: **27.09.79**

## (54) Verfahren zur Herstellung von modifizierten Alkydharzen und deren Verwendung als Lackbindemittel.

(30) Priorität: **02.10.78 DE 2842919**
**01.06.79 DE 2922370**

(43) Veröffentlichungstag der Anmeldung: **28.05.80 Patentblatt 80/11**

(45) Bekanntmachung des Hinweises auf die Patenterteilung: **20.01.82 Patentblatt 82/3**

(84) Benannte Vertragsstaaten: **BE CH FR GB IT NL SE**

(56) Entgegenhaltungen:
**DE-A1-2 503 389**
**DE-A1-2 516 386**
**GB-A-1 038 696**

(73) Patentinhaber: **Henkel Kommanditgesellschaft auf Aktien, -Patentabteilung-**
**Postfach 1100 Henkelstrasse 67,**
**D-4000 Düsseldorf 1 (DE)**

(72) Erfinder: **Eschwey, Helmut, Dr., Leitenstorffer Strasse 24, D-4000 Düsseldorf-Benrath (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 011 112 B1

# Verfahren zur Herstellung von modifizierten Alkydharzen und deren Verwendung als Lackbindemittel

Die Erfindung betrifft die Herstellung von mit Glycid modifizierten Alkydharzen sowie ihre Verwendung als in Wasser lösliche Bindemittel für Lacke bzw. Überzugsmittel.

Es ist bekannt, dass fettsäuremodifizierte Alkydharze, bedingt durch ihren überwiegend hydrophoben Molekülaufbau, in Wasser unlöslich sind und nur gelöst in organischen Lösungsmitteln als Überzugsmittel verwendet werden können. Zur Entwicklung umweltfreundlicher Lacksysteme wurden in den vergangenen Jahren zahlreiche Versuche unternommen, Bindemittel so zu modifizieren, dass sie in Wasser emulgierbar, mit Wasser verdünnbar oder in Wasser löslich wurden. Dabei muss das hydrophobe Alkydharz so hydrophil gemacht werden, dass es aus wässrigem Medium applizierbar ist, jedoch sein hydrophober Rest einen möglichst wasserbeständigen Lacküberzug ergibt.

Eine bekannte Methode zur Hydrophilierung ist die Einführung zahlreicher Carboxylgruppen in Alkydharze, die dann als Aminsalze wasserlöslich sind. Derartig anionisch hydrophilierte Lacksysteme stellen jedoch deshalb keine befriedigende Lösung des Problems dar, da sie grössere Mengen flüchtiger Amine und häufig organische Hilfslösungsmittel enthalten. Ferner ist infolge des anionischen Charakters des Bindemittels der Lackfilm gegen Wasser und insbesondere basische Medien empfindlich.

Ausserdem war es bekannt, Alkydharze unter Einkondensieren von erheblichen Anteilen an Polyalkylenglykolen, insbesondere Polyethylenglykol, herzustellen. Dadurch wird aber eine bleibende in vielen Fällen unerwünschte Hydrophilierung erreicht, die sich ungünstig auf die Stabilität der gebildeten Lackfilme auswirkt.

Schliesslich war zu erwarten, dass wässrige Emulsionen oder Dispersionen eine günstigere Lösung des Problems ermöglichen. Auf organische Lösungsmittel könnte weitgehend verzichtet und der Anteil flüchtiger Amine gering gehalten werden. Die Stabilisierung solcher Emulsionen erfolgt überwiegend durch Einkondensieren von Polyethylenglykolketten. Die Nachteile der Polyethylenglykolketten liegen einerseits in der mangelnden Wasserbeständigkeit der resultierenden Lacküberzüge, da die hydrophilen Ketten unverändert im Lackfilm bleiben und andererseits in der meist mangelnden Stabilität der Emulsionen sowie dem unzureichenden Dispersionsgrad. Daher erfolgte kein grösserer Einsatz derartiger Alkydharzemulsionen in der Praxis.

Aufgabe der vorliegenden Erfindung war es, die geschilderten Nachteile auszuschalten und fettsäuremodifizierte Alkydharze so abzuwandeln, dass sie einerseits in Wasser leicht dispergierbar bzw. praktisch klar löslich werden, ohne dass grössere Mengen Amine benötigt werden und andererseits die Empfindlichkeit der gehärteten Filme möglichst gering halten.

Das erfindungsgemässe Verfahren zur Herstellung freie Hydroxylgruppen enthaltender Alkydharze ist dadurch gekennzeichnet, dass man auf fettsäuremodifizierte Alkydharze mit Säurezahlen zwischen 30 und 180 unter an sich bekannten Bedingungen Glycid einwirken lässt, bis die Säurezahl 5 bis 35, insbesondere 15 bis 30, beträgt. Die so erhaltenen Verfahrensprodukte können als Bindemittel für trocknende, insbesondere ofentrocknende, wasserverdünnbare Lacksysteme verwendet werden, wobei sie vorteilhaft in einer Menge von 20 bis 60 Gew.%, bezogen auf das gesamte Lacksystem, vorliegen.

Durch die Umsetzung mit Glycid werden in die Alkydharze 2,3-Dihydroxypropylgruppen eingeführt. Je nach Gehalt an 2,3-Dihydroxypropylgruppen werden in Wasser lösliche oder aber unter Zusatz geringer Emulgatormengen extrem leicht emulgierbare Alkydharze erhalten. Sie sind auch ohne Zusatz organischer Hilfslösungsmittel in kolloidale Lösungen bzw. feinteilige Mikroemulsionen mit Teilchengrössen zwischen etwa 0,01 bis 0,5 µm, die visuell von echten Lösungen nicht unterscheidbar sind, überführbar.

Entsprechend der feindispersen Verteilung treten bei derartigen Wasserlacken die von grobteiligen Emulsionen und Dispersionen her bekannten Nachteile wie allgemein mangelnde Stabilität, mangelhafter Verlauf, mangelnde Filmbildung und Koaleszenz nicht auf. Trotz ihrer hydrophilen Modifizierung mit Glycid besitzen die entsprechenden Lacküberzüge ausgezeichnete Beständigkeitswerte insbesondere gegenüber Wasser und Alkalien, da sie als hydroxylgruppenreiche Polyester besonders vernetzungsaktiv sind und beim Einbrennen, beispielsweise mit dem meist verwendeten Hexamethylether des Hexamethylolmelamins (HMMM) ihren hydrophilen Charakter verlieren.

Während die Mehrzahl der literaturbekannten Alkydharze auch bei Verwendung bewährter Emulgatoren nur unbefriedigend emulgierbar ist, sind die 2,3-Hydroxypropylgruppen enthaltenden Alkydharze, unabhängig von der Rezeptur des Bindemittels hinsichtlich der Emulgierfreundlichkeit überraschend verbessert.

Ausgangsmaterialien und Methoden zur Herstellung von Alkydharzen sind bekannt. Unter dem Begriff Alkydharze sind Polykondensate aus mehrwertigen Alkoholen und mehrwertigen Carbonsäuren zu verstehen, welche mit Monoalkoholen und/oder -carbonsäuren modifiziert sein können. Zur Gewinnung ofentrocknender Alkydharze kommen insbesondere ölfreie, kurz- und mittelölige Alkydharze infrage, d.h. Polyester mit einem Fettsäuregehalt unter etwa 55 Gew.%.

Zur Herstellung eines leicht in Wasser emulgierbaren Alkydharzes ist in der Regel eine Glycidmenge von 5 bis 20 Gew.%, bezogen auf Alkydharz, ausreichend. Bei Glycidmengen zwischen 20 und 30 Gew.% wird das Alkydharz schliesslich wasserlöslich, so dass sich ein Zusatz von Fremdemulgatoren zur Stabilisierung im wässrigen Medium

ganz erübrigt. Eine übermässige Hydrophilierung des Alkydharzes mit mehr als 30 Gew.% Glycid ist im allgemeinen ohne Vorteil und erscheint aus ökonomischen Gründen wenig sinnvoll.

Unabhängig von der Auswahl der Alkydharzrohstoffe sollte die Säurezahl 5 bis 35, insbesondere 15 bis 30, betragen. Ähnlich wie bei den bekannten nichtionisch hydrophilierten Alkydharzen ist auch im vorliegenden Fall eine zusätzliche geringfügige ionische Stabilisierung ratsam. Bei den 2,3-Dihydroxypropylgruppen tragenden Alkydharzen führt sie zu besonders feinteiligen Emulsionen bzw. kolloidalen Lösungen. Eine weitergehende anionische Hydrophilierung durch eine Säurezahl >35 ist nicht angezeigt, da sonst der im Vergleich zu den bekannten wasserverdünnbaren Alkydharzen hoher Säurezahl (40 bis 120) bestehende Vorteil des geringeren Aminbedarfs gemindert wird.

Die 2,3-Dihydroxypropylgruppen enthaltenden Alkydharze können nach allen dem Fachmann bekannten Kondensationsverfahren hergestellt werden, wobei die Umsetzung mit Glycid in einer bevorzugten Ausführungsform sich als letzter Schritt an die Alkydharzherstellung anschliesst. Man geht dabei von den bekannten Alkydharzen mit einer Säurezahl zwischen 30 und 180, insbesondere 40 bis 120 aus und setzt dann mit Glycid um, wobei sowohl die erwünschte nichtionische Hydrophilierung erreicht als auch die unerwünscht hohe Säurezahl gezielt abgesenkt wird. In einer weiteren Ausführungsform werden konventionelle Alkydharze einer Säurezahl von etwa 5 bis 40, wie sie als Lösungsmittellacke bekannt sind, zunächst mit Glycid umgesetzt, wobei carboxylgruppenfreie Polyester erhalten werden. Diese werden dann zur Einstellung der notwendigen Säurezahl von 5 bis 35 in einem anschliessenden Kondensationsschritt mit Carbonsäuren oder deren Anhydriden zur Reaktion gebracht.

Die Umsetzung mit Glycid erfolgt in bekannter Weise bei üblichen für die Umsetzung der Epoxidgruppe bekannten Bedingungen. Hydroxyl- und Carboxylgruppen reagieren bei Temperaturen zwischen 90 und 160°C unter Verwendung bewährter Katalysatoren wie Natriummethylat, tertiärer Amine, z.B. Triethylamin, Dimethylcetylamin oder Aminoxide.

Die erfindungsgemäss erhältlichen 2,3-Dihydroxypropylgruppen enthaltenden Alkydharze sind nach partieller bzw. vollständiger Neutralisation der noch vorhandenen Carboxylgruppen mit anorganischen oder organischen Basen in Wasser ohne Zusatz organischer Lösungsmittel kolloidal löslich bzw. unter Zusatz geringer Emulgatormengen, d.h. etwa 1 bis 5 Gew.%, bezogen auf Alkydharzemulsion, leicht emulgierbar. Vorteilhafterweise werden zur Emulgierung oder auch nur zur Verbesserung der Lagerstabilität Additionsprodukte des Glycids oder Gemische aus Glycid und Ethylenoxid an Alkohole bzw. Esteralkohole oder Alkylphenole oder Fettsäuren, Fettamine der Fettsäureamide mit 26 bis 12 Kohlenstoffatomen im hydrophoben Molekülteil, wobei aber 2 bis 22 Hydroxylgruppen pro Gesamtmolekül vorliegen sollen, eingesetzt.

Auch ist die Verwendung von Aminoxiden der Formel

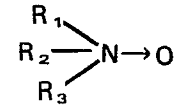

möglich. Dabei bedeutet $R_1$ einen Kohlenwasserstoffrest mit 8 bis 30, insbesondere 8 bis 18 Kohlenstoffatomen, der gegebenenfalls 1 bis 3 Ethergruppen und bis zu 4 Hydroxylgruppen enthalten kann und $R_2$ und $R_3$ einen gegebenenfalls durch Heteroatome, wie Sauerstoff unterbrochenen aliphatischen bzw. cycloaliphatischen Kohlenwasserstoffrest mit 2 bis 32, insbesondere 2 bis 20 Kohlenstoffatomen, der auch bis zu 4 Hydroxylgruppen enthalten kann. In der Praxis hat sich ein Zusatz eines Additionsproduktes von 6 bis 9 Mol Glycid an 1 Mol Nonylphenol bewährt.

Die kolloidalen Lösungen bzw. Mikroemulsionen können nach herkömmlichen Methoden pigmentiert werden. Als Lackbindemittel zeichnen sich Kombinationen von 2,3-Dihydroxypropylgruppen enthaltenden Alkydharzen mit Aminoharzbildnern wie Hexamethylether des Hexamethylolamins bzw. den entsprechenden Kondensaten durch besonders gute Eigenschaften aus. Das Einbrennen der Lackfilme, die durch Aufbringen der erfindungsgemässen kolloidalen Lösungen bzw. Mikroemulsionen nach bekannten Methoden erfolgt ist, erfolgt nach einer Vortrocknung bei Temperaturen zwischen etwa 120 und 180°C in geeigneten Trockenöfen bzw. Trockenkanälen.

Die Lacke können zum Überziehen der verschiedensten Materialien, wie Glas oder Metall, z.B. Aluminium, Eisen, Stahl und dergleichen mehr, verwendet werden. Die entsprechend eingebrannten Überzüge zeichnen sich besonders durch ihre verbesserte Wasserbeständigkeit aus. Sie sind sowohl den herkömmlichen Emulsionen als auch den wasserverdünnbaren aminneutralisierbaren System hoher Säurezahl deutlich überlegen. Sie erreichen bzw. übertreffen teilweise den Qualitätsstandard der Alkydharze wie sie aus Lösungsmitteln eingesetzt bzw. aufgebracht werden. In diesem Zusammenhang wird besonders auf die Vorteile hingewiesen, die durch den vollständigen Verzicht auf organische Lösungsmittel und den äusserst geringen Anteil flüchtiger Amine gegeben sind.

*Beispiele:*

I. *Herstellung der 2,3-Hydropropylgruppen enthaltenden Alkydharze*

Die Kondensation erfolgte in einem heizbaren Glasrundkolben, der mit Rührer und Wasserabscheider versehen war, in üblicher Weise unter Stickstoff. Die Komponenten für die erste Stufe wurden gemeinsam bzw. schrittweise unter Zusatz von 80 ml Xylol bis zur gewünschten Säurezahl erhitzt.

Anschliessend wurde der Ansatz auf 120°C abgekühlt und nach Zugabe von 3 g Dimethylcetylamin/100 g die angegebene Menge an Glycid zu-

getropft. Nach ½ h waren die Umsetzungen mit Glycid beendet und die Kondensationsprodukte verwendungsfähig.

Nachstehend folgen Einzelheiten zur Herstellung der 2,3-Hydroxypropylgruppen enthaltenden Alkydharze 1 bis 4 sowie der vergleichbaren sauren Alkydharze $V_1$ bis $V_4$ angeführt.

1) Es wurden kondensiert:
268,1 g fraktionierte Fettsäure (Kettenlängenverteilung: 2% $C_6$, 60% $C_8$, 35% $C_{10}$, 3% $C_{12}$)
394,3 g Trimethylolpropan
63,1 Adipinsäure
Reaktionszeit: 2 h
Reaktionstemperatur: 235-240°C
Säurezahl: <5
Durch Zugabe von 274,5 g Trimellitsäureanhydrid und weiteres Erhitzen wurde bis zu einer Säurezahl von 120 kondensiert. Nach Abkühlen auf 120°C wurde unter Rühren mit 168 g Glycid bis zur Säurezahl von 23,4 umgesetzt.

2) Folgende Bestandteile wurden in zwei Stufen kondensiert bzw. verestert:
266,5 g Fettsäuren (8% Stearinsäure, 32% Ölsäure, 54% konjugierte und 6% nicht konjugierte Linolsäure)
87,6 g Glycerin
228,5 g Butandiol-1,3
234,8 g Phthalsäureanhydrid
182,7 g Trimellitsäureanhydrid
Rekationszeit: 6 h
Reaktionstemperatur: 200°C
Säurezahl: 81
Anschliessend wurde mit 75 g Glycid bis zur Säurezahl 26,4 umgesetzt.

3) Es wurden kondensiert:
401,3 g Fettsäure (Kettenlängenverteilung: 1% $C_6$, 98% $C_8$, 1% $C_{10}$)
283,6 g Pentaerythrit
192,7 g Phthalsäureanhydrid
125,3 g Adipinsäure
Reaktionszeit: 2 h
Reaktionstemperatur: 240°C
Säurezahl: 70,6
Anschliessend wurde mit 62 g Glycid bis zur Säurezahl 26,2 umgesetzt.

4) Es wurden kondensiert:
257 g Fettsäure (15% Palmitinsäure, 5% Stearinsäure, 25% Ölsäure, 45% Linolsäure, 7% Linolensäure)
84,6 g Glycerin
254,7 g Neopentylglycol
226,8 g Phthalsäureanhydrid
176,5 g Trimellitsäureanhydrid
Rekationszeit: 5½ h
Reaktionstemperatur: 200°C
Säurezahl: 81,8
Anschliessend wurde mit 84 g Glycid bis zur Säurezahl 18 umgesetzt.

Zu Vergleichszwecken wurden die folgenden als Basis für wasserverdünnbare Alkydharze geeigneten Kondensate hergestellt: Die Beispiele wurden wiederholt, jedoch ohne Reaktion mit Glycid. Beim ersten Beispiel wurde aber bis zu einer Säurezahl von 85 weiterkondensiert: Harz: $V_1$. Die übrigen Harze der ersten Stufe der Beispiele wurden direkt zu Vergleichszwecken benutzt: Harze $V_2$, $V_3$, $V_4$ (SZ 81; 70,6 und 81,8).

II. *Herstellung von Überzügen*

Die erfindungsgemäss erhaltenen Alkydharze wurden in der Wärme mit 4,4 g des Adduktes von 7,5 Mol Glycid an 1 Mol Nonylphenol als Hilfsemulgator (bezogen auf 100 Harz) vermischt und mit Dimethylethanolamin neutralisiert. Anschliessend wurde so viel Wasser zugegeben, dass die Mischung 45% Feststoff enthielt. Alle Zusammensetzungen waren praktisch klar und hatten das Aussehen von Lösungen, d.h. sie entsprachen in ihrem äusseren Erscheinungsbild konventionellen Lacklösungen bzw. wasserverdünnten Alkydharzlacken.

In der nachstehenden Tabelle 1 ist in Abhängigkeit von Harz und Beispiel 1 bis 4 die Zusammensetzung der Überzugsmittel, in die noch jeweils 19,2 g des Hexamethylethers des Hexamethylolmelamins (HMMM) eingemischt wurde.

*Tabelle 1*

| Beispiel | 1 | 2 | 3 | 4 |
|---|---|---|---|---|
| Alkydharz | 42,0 | 42,0 | 42,0 | 42,0 |
| Dimethyl-ethanolamin | 1,5 | 1,8 | 1,7 | 1,2 |
| Emulgator | 3,0 | 3,0 | 3,0 | 3,0 |
| Wasser | 53,5 | 53,2 | 53,3 | 53,8 |

Zum Vergleich wurden aus den korrespondierenden Harzen $V_1$ bis $V_4$ ebenfalls Überzugsmittel hergestellt. Dazu werden diese mit Ethylenglykolmonobutylether auf einen Feststoffgehalt von 85 Gew.% verdünnt, mit einer der Säurezahl entsprechenden Menge Dimethylehtanolamin neutralisiert und mit Wasser auf 45% Feststoffgehalt verdünnt. Die Zusammensetzungen sind Tabelle 2 zu entnehmen. Zum Einbrennen werden sie ebenfalls mit Hexamethylmethoxymelamin als Vernetzer im Gewichtsverhältnis Alkydharz: Melaminharz = 7:3, d.h. 19,2 g auf 100 g, versetzt.

In der nachstehenden Tabelle 2 ist die Zusammensetzung in Abhängigkeit von Vergleichsharz angegeben.

*Tabelle 2*

| Vergleich | $V_1$ | $V_2$ | $V_3$ | $V_4$ |
|---|---|---|---|---|
| Harz | 45,0 | 45,0 | 45,0 | 45,0 |
| Ethylenglykol-monobutylether | 7,9 | 7,9 | 7,9 | 7,9 |
| Dimethyl-ethanolamin | 6,1 | 4,5 | 5,1 | 5,9 |
| Wasser | 41,0 | 42,6 | 42,0 | 41,2 |

Prüfung der Überzüge:

Zur Prüfung der Filme wurden die Überzugsmittel auf Glasplatten aufgestrichen und 30 min bei 150°C eingebrannt. Die Trockenfilmdicke betrug 50 µm. Die Bestimmung der Filmhärte erfolgte durch Messung der Pendelhärte nach DIN 53157.

Zur Ermittlung der Wasserbeständigkeit wurden die Filme bei 40°C in destilliertes Wasser eingetaucht und nach 1, 5, 10, 20 und 30 h hinsichtlich Bläschenbildung und Ablöseerscheinungen beurteilt. Die Beurteilung erfolgte nach einem 5-Punktesystem:
1 Film unverändert
2 beginnende Bläschenbildung am Rand
3 leichte Bläschenbildung auf der gesamten Filmfläche
4 starke Bläschenbildung auf der gesamten Filmfläche
5 Film ist vom Glasuntergrund abgelöst

Alle Filme waren klar, glänzend und ohne Verlaufstörungen und ergaben ausreichend harte Lackfilme.

In der nachfolgenden Tabelle 3 ist für die Beispiele 1 bis 4 und die Vergleiche $V_1$ bis $V_4$ die Pendelhärte und das Verhalten gegenüber destilliertem Wasser gemäss vorstehendem Schema angegeben.

*Tabelle 3*

Vergleich der Pendelhärten und Wasserbeständigkeit

| | Pendelhärte (DIN 53157) s | Wasserbeständigkeit 1 h | 5 h | 10 h | 20 h | 30 h |
|---|---|---|---|---|---|---|
| Beispiel 1 | 135 | 1 | 1 | 1 | 1 | 2 |
| Beispiel 2 | 114 | 1 | 1 | 1 | 1-2 | 2 |
| Beispiel 3 | 117 | 1 | 1 | 1 | 1 | 2 |
| Beispiel 4 | 128 | 1 | 1 | 1 | 1-2 | 1-2 |
| Vergleich 1 | 147 | 1 | 5 | 5 | 5 | 5 |
| Vergleich 2 | 120 | 1 | 2 | 3 | 5 | 5 |
| Vergleich 3 | 112 | 1 | 1 | 4 | 5 | 5 |
| Vergleich 4 | 125 | 1 | 2 | 3 | 4 | 5 |

**Patentansprüche**

1. Verfahren zur Herstellung freie Hydroxylgruppen enthaltender Alkydharze, dadurch gekennzeichnet, dass man auf fettsäuremodifizierte Alkydharze mit Säurezahlen zwischen 30 und 180 unter an sich bekannten Bedingungen Glycid einwirken lässt, bis die Säurezahl 5 bis 35, insbesondere 15 bis 30, beträgt.

2. Verwendung der Verfahrensprodukte nach Anspruch 1 als Bindemittel für trocknende, insbesondere ofentrocknende, wasserverdünnbare Lacksysteme in einer Menge von 20 bis 60 Gew.%, bezogen auf die gesamte Lackmenge.

3. Verwendung der Verfahrensprodukte nach Anspruch 1 unter Zusatz von 1 bis 5 Gew.% eines einkondensierbaren bzw. thermolabilen Emulgators auf Basis von Glycidaddukten bzw. Aminoxiden.

**Claims**

1. A process for the production of alkyd resins containing free hydroxyl groups, characterised in that glycidol is allowed to act under conditions known *per se* on fatty-acid-modified alkyd resins having acid numbers of from 30 to 180 until the acid number amounts to between 5 and 35, and more particularly to between 15 and 30.

2. The use of the products obtained by the process claimed in claim 1 as binders for drying, particularly oven-drying and water-dilutable lacquer system in a quantity of from 20 to 60% by weight, based on the total quantity of lacquer.

3. The use of the products obtained by the process claimed in claim 1 in conjunction with from 1 to 5% by weight of a co-condensible or thermolabile emulsifier based on glycidol adducts or amine oxides.

**Revendications**

1. Procédé de préparation de résines alkydes contenant des groupes hydroxy libres, caractérisé en ce que l'on fait agir le glycide dans des conditions connues en soi sur des résines alkydes modifiées par des acides gras et présentant des indices d'acide de 30 à 180, jusqu'à des indices d'acide de 5 à 35, plus spécialement de 15 à 30.

2. Utilisation des produits obtenus par le procédé selon la revendication 1 en tant que liants pour des systèmes de peintures et vernis diluables à l'eau et séchant, en particulier séchant au four, en quantité de 20 à 60% en poids de la quantité de peinture ou vernis.

3. Utilisation des produits obtenus par le procédé selon la revendication 1 avec adjonction de 1 à 5% en poids d'un agent émulsionnant, condensable ou instable à la chaleur, à base d'adducts du glycide ou d'oxydes d'amines.